**Europäisches Patentamt**

**European Patent Office**

**Office européen des brevets**

(19)

(11) Publication number : **0 369 951 B1**

# (12) EUROPEAN PATENT SPECIFICATION

(45) Date of publication of patent specification :
**16.09.92 Bulletin 92/38**

(51) Int. Cl.⁵ : **B60N 2/38**

(21) Application number : **89830474.6**

(22) Date of filing : **31.10.89**

(54) **A seat for tractors with reversible driving position.**

(30) Priority : **09.11.88 IT 5352288 U**

(43) Date of publication of application :
**23.05.90 Bulletin 90/21**

(45) Publication of the grant of the patent :
**16.09.92 Bulletin 92/38**

(84) Designated Contracting States :
**AT DE ES FR GB SE**

(56) References cited :
**BE-A- 665 061**
**GB-A- 1 581 842**
**US-A- 3 448 820**
**US-A- 3 831 699**
**US-A- 4 072 343**

(73) Proprietor : **SAME S.p.A.**
**Viale F. Cassani, 14**
**I-24047 Treviglio Bergamo (IT)**

(72) Inventor : **Palestra, Siro**
**Via Cimabue, 4**
**I-20148 Milano (IT)**

(74) Representative : **Buzzi, Franco et al**
**c/o Jacobacci-Casetta & Perani S.p.A. Via**
**Alfieri, 17**
**I-10121 Torino (IT)**

EP 0 369 951 B1

Jouve, 18, rue Saint-Denis, 75001 PARIS

## Description

The subject of the present invention is a reversible driving position for agricultural tractors, that is, a position arranged to enable the tractor to be driven forwards or backwards.

The invention is more particularly concerned with a seat for the reversible driving position of a tractor, of the type described in the pre-characterizing portion of claim 1.

Conventionally, the means for supporting the seat include two separate sets of components, one for its rotation and the other for its vertical movement (the latter normally constituted by an articulated parallelogram structure), as disclosed in the patent application GB-A-1 581 842, which have the disadvantage that they are bulky and structurally complex and expensive.

The object of the present invention is to avoid the above problems and to provide a seat for tractors with reversible driving positions of the type defined at the beginning, in which. the rotational and vertical movements are achieved by a reduced number of components which are less bulky, easier to manufacture and practical and reliable in operation.

According to the invention, this object is achieved by virtue of the features set forth in the characterizing portion of claim 1

According to a preferred embodiment of the invention, the fixed body comprises a hollow cylindrical base which has a vertical axis and carries a plurality of helical cams on its inner walln, and the movable body comprises a cylindrical pivot which can rotate coaxially within the base and carries a plurality of support and guide shoes which bear slidably on the helical cams.

The locking means conveniently comprise a radial pin which can slide through a hole in the base and is adapted to engage one or other of a pair of corresponding holes arranged in the pivot in angular correspondence with the opposing positions of the seat.

Further characteristics and advantages of the present invention will become clear from the detailed description which follows with reverence to the appended drawings, provided by way of non-limiting example, in which:

Figure 1 is a schematic side elevational view of a reversible driving position for tractors, provided with a seat according to the invention, and

Figure 2 is an exploded perspective view of the seat.

With reference to the drawings, the cab of an agricultural tractor is schematically indicated 1 and is provided with a reversible driving position, generally indicated 2. The cab 1 has floors at two different levels, a lower front floor 3 and raised rear floor 4 respectively, in correspondence with a front driving and operating unit 5 and a rear driving and operating unit 6, of which the latter is obviously higher than the former. The two driving and operating units 5 and 6 include respective steering columns 5a, 6a adapted selectively to receive a removable steering wheel 7, and lever and pedal control members of known type for operating the propulsion members and the working and signalling equipment of the tractor.

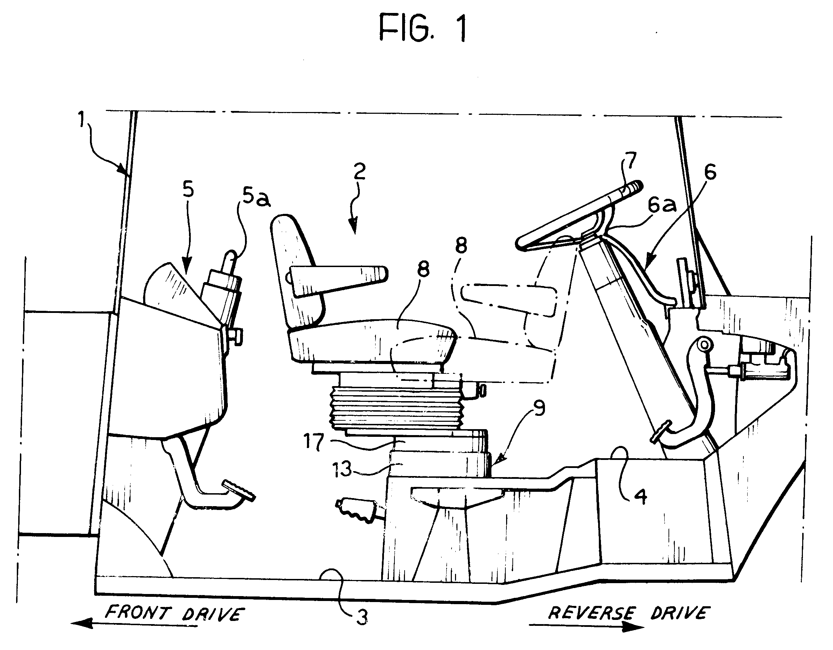

A driving seat, indicated 8, is interposed between the two units 5 and 6 and can be used selectively, in the two configurations shown respectively in broken outline and in continuous outline in Figure 1, for driving the tractor forwards or backwards by means of one or other of the units 5 and 6. As can be seen from the drawing, the seat 8 can be rotated through 180° about a vertical axis between two opposing positions in which it faces one of the units 5, 6 and the other respectively, and is further above the floor 3 of the cab 1 when it is in the position facing the rear unit 6 than when it is in the position in which it faces the front unit 5.

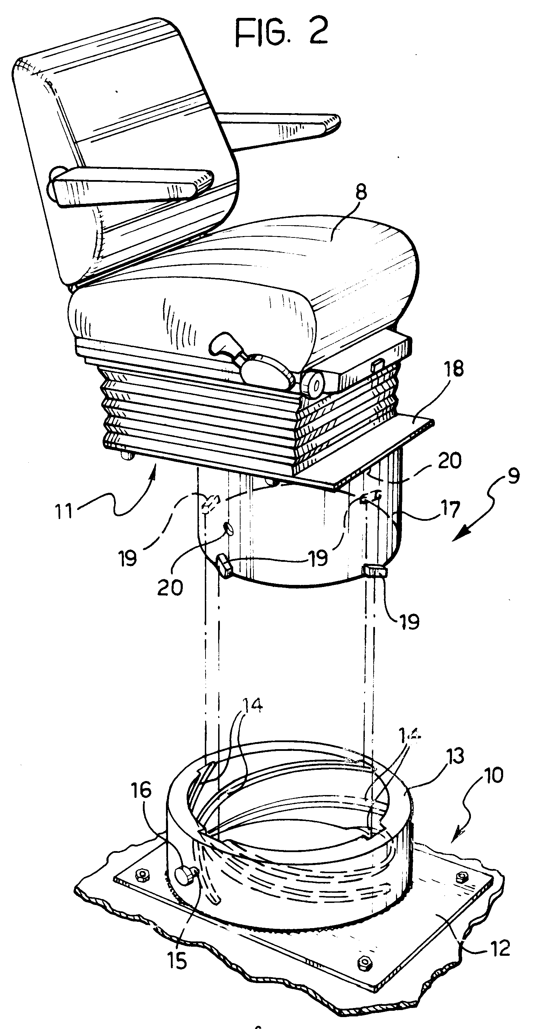

According to the invention, the vertical movement of the seat 8 between the lowered and raised positions takes place simultaneously with its rotation by means of a support device, generally indicated 9 and shown in detail in Figure 2.

The support device 9 includes a fixed body 10 which is fixed to the structure of the cab 1 of the tractor, and a movable body 11 which is fixed to the seat 8. The fixed body 10 includes a horizontal attachment plate 12 which is fixed to the raised rear floor 4 of the cab 1 and from which there extends upwardly a hollow cylindrical base 13 with a vertical axis and four helical grooves 14 formed in its internal side wall. The wall of the base 13 also has a radial hole 15 through which a stop pin 16, whose function will be explained below, can slide.

The movable body 11 is constituted by a cylindrical pivot 17 which projects downwards from an attachment plate 18 fixed to the base of the seat 8. The pivot 17 has four inclined, shoe-like, lateral projections 19 and two diametrally-opposed radial holes 20.

When the support device 9 is in the assembled condition, the pivot 17 is engaged for rotation in the base 13, and the shoes 19 are arranged in sliding contact within the helical grooves 14. The seat 8 can thus be rotated relative to the base 13 between the two opposing positions shown in Figure 1, and can simultaneously be moved vertically between the lowered and raised positions. Locking in one position or the other is achieved by means of the engagement, normally by hand, of the pin 16 in one or other of the two holes 20 in the pivot 17. In order to facilitate locking, the pin 16 may be provided with a spring (not visible in the drawings) for snap-engaging it in one or other of the holes 20 as a result of the movement of the seat 8 from one position to the other.

## Claims

1. A seat for a tractor with a reversible driving position comprising a front driving and operating unit and a rear driving and operating unit which is higher than the front unit, in which the seat can be rotated between the front and rear units by support means which enable it to rotate between two opposing positions in which the seat faces the front unit and the rear unit respectively, and to move vertically between a lowered position and a raised position which correspond respectively to one and to the other of the opposing positions, means being provided for locking the seat in one portion or the other, the support means (9) comprising a body (10) fixed to the structure (4) of the tractor and a movable body (11) fixed to the seat (8), the bodies being interconnected for rotation by mutual coupling means (14, 19), characterized in that the mutual coupling means (14, 19) are helical, said mutual coupling means being adapted to cause the vertical movement of the seat (8) simultaneously with its rotation between the opposing positions.

2. A seat according to Claim 1, characterised in that the fixed body (10) comprises a hollow cylindrical base (13) which has a vertical axis and carries a plurality of helical cams (14) on its internal wall, and the movable body (11) comprises a cylindrical pivot (17) which can rotate coaxially within the base (13) and carries a plurality of support and guide shoes (19) arranged in sliding contact with the helical cams (14).

3. A seat according to Claim 2, characterised in that the locking means comprise a radial pin (16) which can slide through a hole (15) in the base (13) and is adapted to engage one or other of a pair of corresponding holes (20) arranged in the pivot (17) in angular correspondence with the opposing positions of the seat (8).

## Patentansprüche

1. Sitz für einen Traktor mit einer umkehrbaren Fahrstellung, wobei der Traktor eine vordere Fahr- und Betätigungseinheit sowie eine hintere Fahr- und Betätigungseinheit enthält, die höher als die vordere Einheit liegt, wobei der Sitz zwischen der vorderen und hinteren Einheit mit einer Trageinrichtung gedreht werden kann, mit der er sich zwischen zwei entgegengesetzten Stellungen drehen kann, in denen der Sitz der vorderen Einheit bzw. der hinteren Einheit gegenüberliegt, und wobei der Sitz zwischen einer abgesenkten Stellung und einer angehobenen Stellung vertikal bewegt werden kann, die jeweils der einen und der anderen entgegengesetzten Stellung entsprechen, wobei eine Einrichtung vorgesehen ist, um den Sitz in der einen Stellung oder der anderen zu verriegeln, wobei die Trageinrichtung (9) einen Körper (10), der am Aufbau (4) des Traktors befestigt ist, sowie einen bewegbaren Körper (11) enthält, der am Sitz (8) befestigt ist, wobei die Körper für eine Drehung durch eine gegenseitige Kupplungseinrichtung (14, 19) miteinander verbunden sind, dadurch gekennzeichnet, daß die gegenseitige Kupplungseinrichtung (14, 19) schraubenförmig ausgebildet ist, wobei die gegenseitige Kupplungseinrichtung so aufgebaut ist, daß die Vertikalbewegung des Sitzes (8) gleichzeitig mit seiner Drehung zwischen den entgegengesetzten Stellung erfolgt.

2. Sitz gemäß Anspruch 1, dadurch gekennzeichnet, daß der ortsfeste Körper (10) eine hohle, zylindrische Basis (13) enthält, die eine vertikale Achse besitzt und an ihrer Innenwand eine Vielzahl von Schraubenkurven (14) trägt, und daß der bewegbare Körper (11) ein zylindrisches Drehlager (17) enthält, das sich koaxial innerhalb der Basis (13) drehen kann und eine Vielzahl von Trag- und Führungsschuhen (19) trägt, die mit den Schraubenkurven (14) in gleitender Berührung stehen.

3. Sitz gemäß Anspruch 2, dadurch gekennzeichnet, daß die Verriegelungseinrichtung einen radialen Zapfen (16) enthält, der durch eine Öffnung (15) in der Basis (13) gleiten kann und so aufgebaut ist, um in das eine oder andere Paar von entsprechenden Öffnungen (20) einzugreifen, die im Drehlager (17) winkelmäßig in Übereinstimmung mit den entgegengesetzten Stellungen des Sitzes (8) angeordnet sind.

## Revendications

1. Siège pour tracteur avec une position de conduite réversible, comprenant un ensemble avant de conduite et d'actionnement, et un poste arrière de conduite et d'actionnement qui est plus haut que l'ensemble avant, dans lequel le siège peut être tourné entre les ensembles avant et arrière par un dispositif de support qui lui permet de tourner entre deux positions opposées dans lesquelles le siège fait face à l'ensemble avant ou à l'ensemble arrière, respectivement, et de se déplacer verticalement entre une position abaissée et une position élevée qui correspondent respectivement à l'une et à l'autre des positions opposées, des moyens étant prévus pour verrouiller le siège dans une position ou l'autre, le dispositif de support (9) comprenant un corps (10) fixé sur la structure (4) du tracteur et un corps mobile (11) fixé sur le siège (8), les corps étant reliés entre-eux de façon rotative par des moyens de couplage mutuels (14, 19), caractérisé en ce que les moyens de couplage mutuel (14, 19) sont hélicoïdaux, ces moyens de couplage mutuel étant adaptés afin de provoquer le déplacement vertical du siège (8) simultanément avec sa rotation entre les positions opposées.

2. Siège suivant la revendication 1, caractérisé en ce que le corps fixe (10) comprend un socle vertical creux (13) qui comporte un axe vertical et porte une pluralité de cames hélicoïdales (14) sur sa paroi interne, et le corps mobile (11) comprend un pivot cylindrique (17) qui peut tourner coaxialement dans le socle (13) et porte plusieurs patins de support et de guidage (19) disposés en contact à glissement avec la came hélicoïdale (14).

3. Siège suivant la revendication 2, caractérisé en ce que les moyens de verrouillage comprennent une broche radiale (16) qui peut glisser à travers un trou (15) dans le socle (13) et est adaptée pour s'engager dans l'un ou l'autre de deux trous (20) correspondants prévus dans le pivot (17) en correspondance angulairement avec les positions opposées du siège (8)

FIG. 1

...

# FIG. 2